**Europäisches Patentamt**

**European Patent Office**

**Office européen des brevets**

(19)

(11) Numéro de publication : **0 332 476 B1**

(12) **FASCICULE DE BREVET EUROPEEN**

(45) Date de publication du fascicule du brevet :
**05.05.93 Bulletin 93/18**

(51) Int. Cl.$^5$ : **G02F 1/133**

(21) Numéro de dépôt : **89400053.8**

(22) Date de dépôt : **09.01.89**

(54) **Ecran d'affichage en couleur à matrice active sans croisement des conducteurs lignes d'adressage et des conducteurs colonnes de commande.**

(30) Priorité : **11.01.88 FR 8800200**

(43) Date de publication de la demande :
**13.09.89 Bulletin 89/37**

(45) Mention de la délivrance du brevet :
**05.05.93 Bulletin 93/18**

(84) Etats contractants désignés :
**CH DE GB IT LI NL**

(56) Documents cités :
**EP-A- 0 158 366**
**EP-A- 0 189 214**
**EP-A- 0 193 759**
**EP-A- 0 228 317**
**EP-A- 0 244 013**
**US-A- 4 694 287**

(73) Titulaire : **COMMISSARIAT A L'ENERGIE ATOMIQUE**
**31/33, rue de la Fédération**
**F-75015 Paris (FR)**

(72) Inventeur : **Diem, Bernard**
**63 A. rue des Ayguinards**
**F-38240 Meylan (FR)**
Inventeur : **Leroux, Thierry**
**19 Mail Marcel Cachin**
**F-38600 Fontaine (FR)**

(74) Mandataire : **Mongrédien, André et al**
**c/o BREVATOME 25, rue de Ponthieu**
**F-75008 Paris (FR)**

EP 0 332 476 B1

Jouve, 18, rue Saint-Denis, 75001 PARIS

## Description

La présente invention a pour objet un écran d'affichage en couleur à matrice active sans croisement des conducteurs lignes d'adressage et des conducteurs colonnes de commande. Elle s'applique à l'affichage de textes aussi bien qu'à l'affichage d'images animées.

Les écrans d'affichage en couleur à cristaux liquides et à matrice active sont réalisés par l'association de deux parois enserrant un cristal liquide.

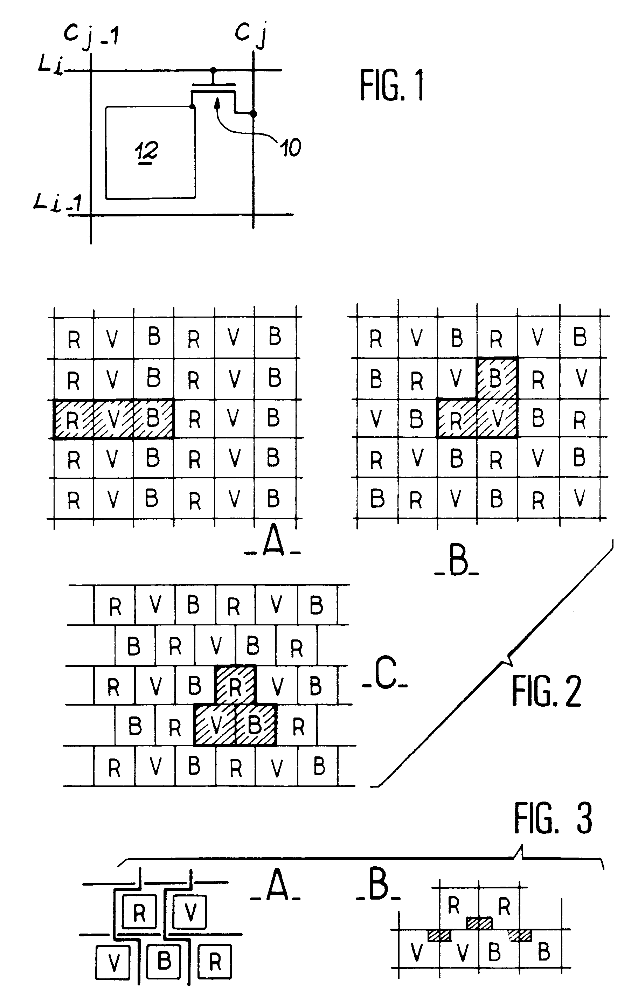

La figure 1 représente les éléments disposés de manière connue sur la première paroi et constituant un point d'image élémentaire (pixel en langage international).

Un transistor en couche mince 10 est relié par sa grille à une ligne conductrice Li, par sa source à une colonne conductrice Cj, et par son drain à une électrode 12. La seconde paroi est recouverte d'électrodes colorées formant une mosaïque de filtres des trois couleurs primaires : rouge, vert et bleu, au pas de la matrice.

Trois principaux types d'arrangement de la mosaïque de filtres sont couramment utilisés. Ils sont représentés figure 2. Un point d'image couleur comprend trois points d'image élémentaires de couleur rouge, verte et bleue. Les points d'image élémentaires sont symbolisés par des carrés, les couleurs qui leur sont affectées sont notées : R : rouge, V : vert, B : bleu.

Sur la figure 2A, on a représenté la structure dite "en bandes". Cette conformation permet le stockage des trois informations R, V, B simultanément mais cette disposition des filtres n'est pas favorable visuellement.

Une structure de type "diagonale" est représentée figure 2B. Cette structure, plus attractive visuellement que la précédente présente l'inconvénient d'un adressage de l'écran plus complexe : un point d'image couleur est réparti sur deux lignes ; les trois couleurs sont affectées à une même colonne.

Une structure de type "triangle" est représentée figure 2C. Les avantages qui concernent le confort de la vision de cette structure par rapport aux deux précédentes sont mis en évidence dans l'article : "Color pixel arrangement evaluation for LC-TV" de S. Tsuruta, K. Mitsuhashi, S. Ichikawa et K. Noguchi paru dans le rapport 1985 international display research conference, pages 24.

La figure 3 représente deux dispositifs connus pour mettre en oeuvre la structure "triangle".

La figure 3A se réfère à l'article : "an amorphous-Si TFT adressed 3.2 in Full color LCD" de F. Funada, Y. Takafuji, K. Yano, H. Take, et M. Matsuura paru dans le rapport SID 86 Digest, page 292.

Cette structure présente l'inconvénient de rallonger le parcours des conducteurs colonnes qui doivent faire des zig-zags entre les électrodes correspondant aux points d'image, de façon à pouvoir décaler les points d'image d'un demi pas entre deux lignes consécutives.

On sait, d'autre part, que les problèmes de fabrication sont d'autant plus importants que les parcours des conducteurs sont longs : on multiplie, par exemple, les risques de court-circuits et de coupures.

La figure 3B représente une deuxième possibilité de mise en oeuvre de la structure "triangle". Celle-ci est décrite dans l'article "A high picture quality LC-TV using triangle trio-color dots" de Saito et de ses collaborateurs paru dans le rapport 1985 international display research conference, page 27. Cette fois, une couleur d'un point d'image couleur met en jeu deux points d'image élémentaires de la même couleur. A chaque point d'image élémentaire est attribué un transistor en couches minces. Le problème posé par cette proposition de configuration est le nombre élevé de transistors en couches minces qui rend l'adressage plus complexe, la réalisation de la matrice plus délicate et qui alourdit les coûts de fabrication.

La présente invention permet, tout en gardant l'avantage du confort visuel de la structure "triangle", de simplifier les moyens mis en oeuvre pour l'adressage des points d'image.

En effet, l'invention préconise de placer les conducteurs lignes et les conducteurs colonnes sur la première et la seconde parois respectivement. D'autre part, les trois points d'image élémentaires formant un point d'image couleur sont adressés simultanément par l'intermédiaire d'un seul conducteur ligne, ce qui a pour effet de simplifier la circuiterie d'adressage, de réduire les parcours des conducteurs et de diminuer ainsi le nombre des court-circuits. Cette configuration permet, à nombre de points d'image couleur égal, de diviser par deux le nombre de transistors en couches minces qui était nécessaire à la réalisation de la configuration décrite figure 3B. Pour un écran de MxN points d'image selon l'invention, on utilise M lignes et 3N colonnes qui correspondent à 3MxN transistors en couche mince ou encore à M+3N connexions, alors que pour un écran tel que décrit figure 3A, on a 2M lignes et 3N/2 colonnes qui correspondent à 3MxN transistors ou encore 2M+(3N/2) connexions, pour un écran tel que décrit figure 3B, on a 6MxN transistors ou encore M+3N connexions. Par rapport aux écrans de l'art antérieur, on réduit soit le nombre de transistors en couche mince, soit le nombre des connexions. Outre que cela entraîne une baisse des coûts de fabrication, cela simplifie la réalisation de l'écran.

Les électrodes reliées par un conducteur colonne sont toutes affectées de filtres de la même couleur rouge, verte ou bleue. Cela permet d'utiliser une méthode d'électrodéposition simple et très performante pour la réalisation de ces filtres.

De manière plus précise, la présente invention a pour objet un écran d'affichage en couleur à matrice active sans croisement des conducteurs lignes d'adressage et des conducteurs colonnes de commande comprenant un cristal liquide intercalé entre une première paroi et une seconde paroi transparentes, ledit écran comportant une pluralité de points d'image couleur, chaque point d'image couleur étant formé de trois points d'image élémentaires de couleur rouge, verte et bleue disposés en triangle, chaque point d'image élémentaire étant constitué sur la première paroi, d'un transistor en couches minces relié à une électrode d'un condensateur, une seconde électrode de ce condensateur étant sur la seconde paroi, les électrodes de la première paroi étant rangées en lignes, les électrodes de la seconde paroi étant rangées en colonnes, chaque colonne d'électrodes correspondant à une couleur successivement rouge, verte, bleue, et les électrodes d'une colonne étant reliées entre elles par un conducteur colonne. Chaque conducteur ligne d'adressage étant commun à deux lignes d'électrodes adjacentes, chaque conducteur porté au potentiel de référence étant commun à deux lignes d'électrodes adjacentes, d'un côté d'une ligne d'électrodes et parallèlement à celle-ci on trouve un conducteur ligne et de l'autre côté de cette ligne d'électrodes et parallèlement à celle-ci on trouve un conducteur porté au potentiel de référence.

D'autres caractéristiques et avantages de l'invention ressortiront mieux de la description qui va suivre, donnée à titre purement illustratif et nullement limitatif, en référence au figures 4 à 6 dans lesquelles :

- la figure 4 représente une disposition selon l'invention des éléments des points d'image élémentaires disposés sur la première paroi ;
- la figure 5 représente une disposition selon l'invention des éléments des points d'image élémentaires disposés sur la seconde paroi ;
- la figure 6 représente les chronogrammes des variations de la tension Vréf et des tensions VLi, VLi+1 et VCj appliquées sur les conducteurs lignes consécutifs Li et Li+1 et sur un conducteur colonne Cj dans le cas où l'on active les points d'image élémentaires correspondant au croisement des conducteurs lignes Li et Li+1 et du conducteur colonne Cj.

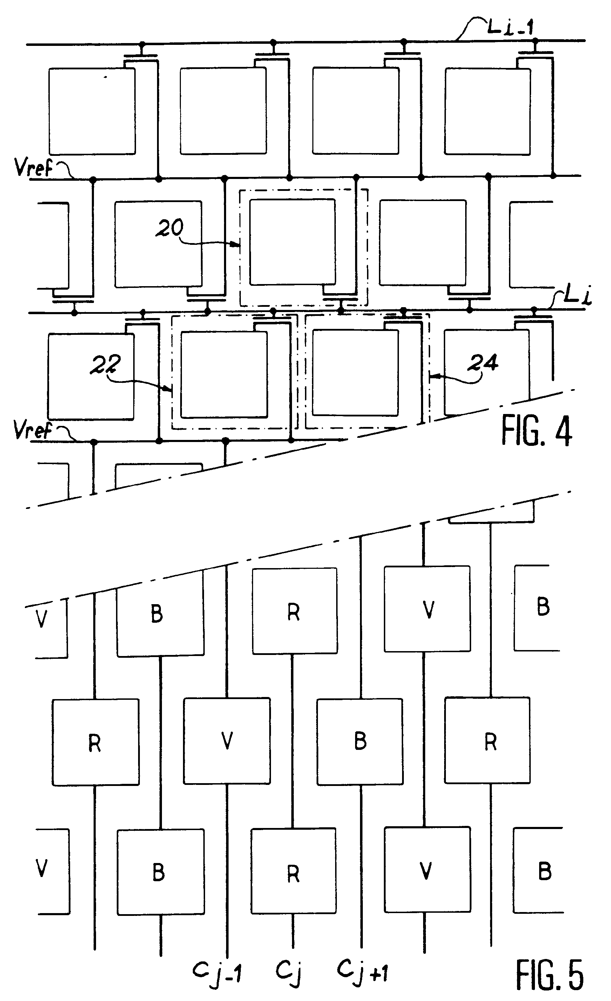

La figure 4 représente les éléments des points d'image élémentaires disposés sur la première paroi. Ces éléments 20 sont un transistor en couches minces de type a-Si:H et une électrode. Le drain du transistor est relié à l'électrode, tandis que sa grille est reliée à un conducteur ligne Li, et sa source est portée à un potentiel de référence Vréf. i est un indice général qui représente le numéro du conducteur ligne. Sur la figure, on a référencé deux conducteurs lignes consécutifs Li-1 et Li, le conducteur ligne suivant Li serait référencé Li+1. On voit sur la figure 4, que les électrodes sont rangées en ligne : d'un côté d'une ligne d'électrodes et parallèlement à celle-ci on trouve un conducteur ligne, de l'autre côté de cette ligne d'électrodes et parallèlement à celle-ci on trouve un conducteur porté à un potentiel de référence Vréf. Trois points d'image élémentaires 20, 22, 24 du même point d'image couleur sont reliés au même conducteur ligne Li. Les valeurs des tensions d'adressage appliquées sur les conducteurs lignes et des tensions de référence dépendent du cristal liquide utilisé et des caractéristiques des transistors.

La figure 5 représente un agencement selon l'invention des électrodes disposées sur la seconde paroi. Ces électrodes sont rangées en colonnes, une colonne correspondant à une couleur rouge R, vert V ou bleu B. Les électrodes d'une même colonne sont reliées par un conducteur colonne Cj. j est un indice général qui représente le numéro du conducteur colonne. Sur la figure, on a référencé trois conducteurs colonnes consécutifs Cj-1, Cj et Cj+1.

La disposition des différents filtres colorés déposés sur les électrodes permet de les réaliser aisément par une méthode d'électrodéposition.

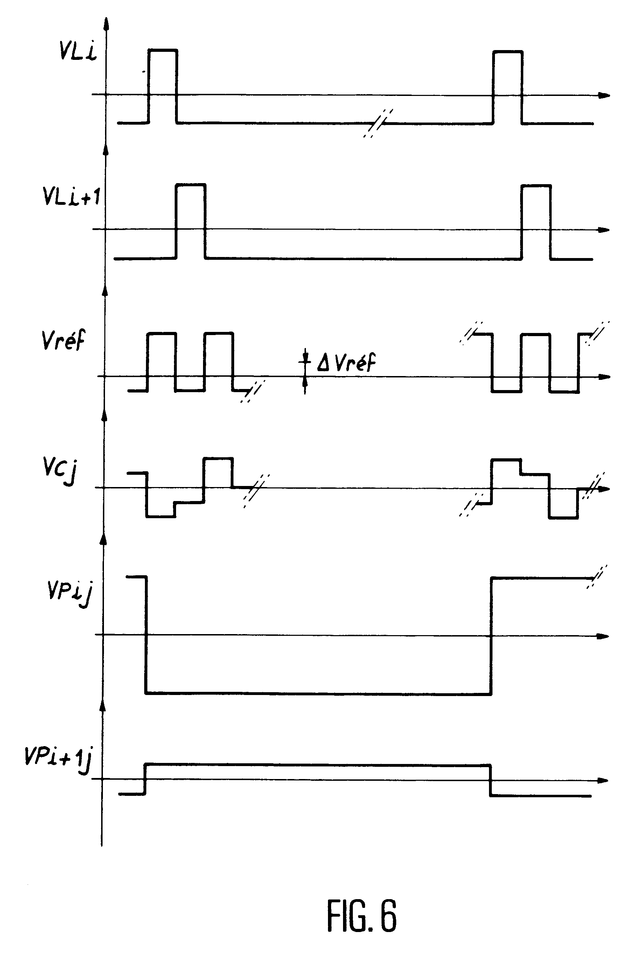

On voit sur la figure 6 des chronogrammes correspondant aux variations de la tension Vréf et des tensions VLi et VLi+1 appliquées aux conducteurs lignes Li et Li+1 ainsi que de la tension VCj appliquée sur un conducteur colonne Cj quand les points d'image élémentaires correspondant aux croisements de ces conducteurs lignes et de ce conducteur colonne sont activés.

D'une manière générale l'adressage des matrices actives consiste à valider successivement les conducteurs lignes périodiquement, la période étant appelée temps de trame T. Les différents points d'image correspondant à un conducteur ligne validé et qui doivent être activés, le sont par les tensions de commande VCj appliquées sur les colonnes. La tension appliquée entre les électrodes d'un point d'image correspond à la différence VCj-Vréf.

Pour garantir au cristal liquide utilisé une durée de vie suffisamment longue, on inverse la phase de la tension d'adressage sur les conducteurs lignes successifs et pour un conducteur ligne donné, toutes les trames. Ce moyen permet d'avoir une puissance moyenne, dissipée dans le cristal liquide, nulle.

La structure même d'un transistor en couches minces fait qu'il apparaît un condensateur parasite au niveau de la grille lors de l'adressage. Cet élément parasite entraîne l'apparition d'une composante de tension continue qui perturbe le bon adressage des points d'image. Afin de compenser ce phénomène, on ajoute une tension continue $\Delta$Vréf à la tension de référence Vréf.

La tension effectivement appliquée entre les électrodes d'un point d'image (ij) correspond à

$$VPij = VCj - Vréf + \Delta Vréf.$$

## Revendications

1. Ecran d'affichage en couleur à matrice active sans croisement des conducteurs lignes d'adressage et des conducteurs colonnes de commande comprenant un cristal liquide intercalé entre une première paroi et une seconde paroi transparente, une pluralité de points d'image couleur, chaque point d'image couleur étant formé de trois points d'image élémentaires de couleur rouge, verte et bleue disposés en triangle, chaque point d'image élémentaire étant constitué sur la première paroi d'un transistor en couches minces relié par sa grille à un conducteur ligne, par sa source à un conducteur porté à un potentiel de référence (Vréf), par son drain à une électrode d'un condensateur, une seconde électrode de ce condensateur étant sur la seconde paroi, les électrodes de la première paroi étant rangées en lignes, les électrodes de la seconde paroi étant rangées en colonnes, chaque colonne d'électrodes correspondant à une couleur successivement rouge (R), verte (V), bleue (B), et les électrodes d'une colonne étant reliées entre elles par un conducteur colonne (Cj), écran caractérisé en ce que :

chaque conducteur ligne d'adressage (Li) étant commun à deux lignes d'électrodes adjacentes, chaque conducteur porté au potentiel de référence (Vréf) étant commun à deux lignes d'électrodes adjacentes, d'un côte d'une ligne d'électrodes et parallèlement à celle-ci on trouve un conducteur ligne (Li) et de l'autre côté de cette ligne d'électrode et parallèlement à celle-ci on trouve un conducteur porté au potentiel de référence (Vréf).

## Patentansprüche

1. Aktiver Matrix-Farbbildschirm ohne Kreuzung der Leiterbahnen für Adressierung und Spaltensteuerung, einen Flüssigkristall zwischen einer ersten und einer zweiten Wand angeordnet, eine Vielzahl Bildfarbpunkte, jeder Bildfarbpunkt aus den drei im Dreieck angeordneten Grundfarbpunkten Rot, Grün und Blau gebildet, jeder der Grundpunkte auf der ersten Wand bestehend aus einem Dünnfilmtransitor dessen Gate mit einer Leiterbahn für Adressierung, dessen Source mit einem einen Bezugswert (Vref) führenden Leiter, und dessen Drain mit einer Elektrode eines Kondensators verbunden ist, eine zweite Elektrode dieses Kondensators an der zweiten Wand liegend, die Elektroden der ersten Wand in Zeilen angeordnet, die Elektroden der zweiten Wand in Spalten angeordnet, jede der Elektrodenspalten entsprechend einer Farbe, nacheinander Rot (R), Grün (V), und Blau (B), und die miteinander durch einen Spaltenleiter (Cj) verbundenen Elektroden, umfassend,

dadurch gekennzeichnet, daß:

jede Zeilenleiterbahn zur Adressierung (Li) gemeinsam für zwei Zeilen aneinandergrenzender Elektroden ist, jede Leiterbahn für zwei Zeilen aneinandergrenzender Elektroden den Bezugswert (Vref) führt, man auf einer Seite einer Zeile von Elektroden, und zu diesen parallel angeordnet, eine Zeilenleiterbahn (Li), und auf der anderen Seite der Elektroden, und parallel zu diesen angeordnet, eine das Bezugspotential (Vref) führende Leiterbahn findet.

## Claims

1. Active matrix colour display screen without any intersection of the addressing row conductors and control column conductors incorporating a liquid crystal placed between a first wall and a second transparent wall, a plurality of colour image points, each colour image point being formed from three elementary image points in red, green and blue arranged in the form of a triangle, each elementary image point being constituted on the first wall of a thin film transistor connected by its gate to a row conductor, by its source to a conductor raised to a reference potential (Vref), by its drain to an electrode of a capacitor, a second electrode of said capacitor being on the second wall, the electrodes of the first wall being arranged in the form of rows, the electrodes of the second wall being arranged in the form of columns, each electrode column corresponding to a colour which is successively red (R), green (V), blue (B) and the electrodes of a column being interconnected by a column conductor (Cj), characterized in that each addressing row conductor (Li) is common to two adjacent electrode rows, each conductor raised to the reference potential (Vref) being common to two adjacent electrode rows, on one side of an electrode row and parallel thereto there is a row conductor (Li) and on the other side of said electrode row and parallel thereto there is a conductor raised to the reference potential (Vref).

FIG. 1

C$_{j-1}$   C$_j$

L$_i$

12

10

L$_{i-1}$

| R | V | B | R | V | B |
|---|---|---|---|---|---|
| R | V | B | R | V | B |
| R | V | B | R | V | B |
| R | V | B | R | V | B |
| R | V | B | R | V | B |

_A_

| R | V | B | R | V | B |
|---|---|---|---|---|---|
| B | R | V | B | R | V |
| V | B | R | V | B | R |
| R | V | B | R | V | B |
| B | R | V | B | R | V |

_B_

FIG. 2

| R | V | B | R | V | B |
|---|---|---|---|---|---|
| B | R | V | B | R | |
| R | V | B | R | V | B |
| B | R | V | B | R | |
| R | V | B | R | V | B |

_C_

FIG. 3

_A_   _B_

R   V
V   B   R

R   R
V   V   B   B

FIG. 4

$C_{j-1}$  $C_j$  $C_{j+1}$

FIG. 5

FIG. 6